(19) **Europäisches Patentamt / European Patent Office / Office européen des brevets**

(11) **EP 1 898 657 A1**

(12) **EUROPEAN PATENT APPLICATION**

(43) Date of publication:
**12.03.2008 Bulletin 2008/11**

(51) Int Cl.:
***H04Q 7/38*** (2006.01)

(21) Application number: **06076686.2**

(22) Date of filing: **06.09.2006**

| | |
|---|---|
| (84) Designated Contracting States: **AT BE BG CH CY CZ DE DK EE ES FI FR GB GR HU IE IS IT LI LT LU LV MC NL PL PT RO SE SI SK TR** Designated Extension States: **AL BA HR MK YU** | (72) Inventors: • **Busropan, Bryan Jerrel** **2492 MR Den Haag (NL)** • **van Loon, Johannes Maria** **2719 JE Zoetermeer (NL)** |
| (71) Applicant: **Nederlandse Organisatie voor Toegepast-Natuurwetenschappelijk Onderzoek TNO 2628 VK Delft (NL)** | (74) Representative: **van Loon, C.J.J. et al VEREENIGDE Johan de Wittlaan 7 2517 JR Den Haag (NL)** |

(54) **Method and system for making a connection between a fixed or internet terminal and a mobile terminal**

(57) Method and system for making a connection between a fixed or Internet terminal (A) and a mobile terminal (B) via a fixed (F) and a mobile network (M) for a reduced tariff. the mobile terminal's network number (Bm) is, by means of an interconnection server (C), connectable with the fixed network by means of a fixed network number, registered, linking the mobile terminal's network number (Bm) to the fixed network number (Bf). the fixed terminal or Internet terminal (A), desiring to set up a connection to the mobile terminal (B), sets up a call to the fixed network number (Bf). The interconnection server (C) sends a request to the mobile terminal (B) to set up a connection to the interconnection server. After connection from the mobile terminal (B) to the interconnection server (C), the interconnection server interconnects both, the connection of the mobile terminal (B) to the interconnection server (C) at one side, with the connection of the fixed terminal (A) to the interconnection server (C) at the other side.

EP 1 898 657 A1

**EP 1 898 657 A1**

**Description**

Field

The invention concerns a method and system for making a connection between a fixed or Internet terminal and a mobile terminal, especially making a call from a fixed or Internet terminal to a mobile terminal.

Background

With the current billing tariffs it is considerable more expensive to set up a call from a fixed telephone device to a mobile device than from a mobile telephone device to another mobile or fixed telephone device: depending on the operator the first costs at the time of drafting this patent application about 0,15 €/min, the second only about 0,02 €/min.

To bypass this tariff inequality companies sometimes use a so-called SIMbox between the side of the outgoing calls of a PBX and the public telephone network, which SIMbox comprises a number of modules (with SIM cards) which present themselves as mobile telephone devices, providing that the PBX presents itself as a mobile calling subscriber (after all routed via the SIMbox). In that way the public network is misled, causing that the call that was initiated by the PBX, will be invoiced as were it a call that was initiated by a mobile terminal. As, by doing so, the tariff structure of the mobile telephone service providers is bypassed, SIMboxes are, in most cases, prohibited by the mobile operator.

The invention aims to present an alternative for the (banned) SIMboxes by means of a method and system which will be outlined below. The invention also aims to present a method for setting up calls from Internet based phones to mobile terminals. For such calls an account will be needed at a VoIP (voice over IP) service provider which may be a drawback.

Summary

The invention provides a method for making a connection between a fixed terminal and a mobile terminal via a fixed telecommunication network or the Internet and a mobile telecommunication network, which comprises the steps outlined below.

the mobile terminal's network number is, by means of an interconnection server which is connectable with the fixed network by means of a number of fixed network (connection) numbers, registered, linking the mobile terminal's (connection) network number to at least one of those fixed network numbers. The linking parameters - i.e. the relevant mobile number and the fixed number(s) linked - may be stored in a register within the interconnection server. The user of the mobile terminal may by any means be notified - during or after the registration action - of the value of the relevant fixed number(s).

In a subsequent operational step the fixed terminal, desiring to set up a connection to the mobile terminal, sets up a connection - the first partial connection - to the fixed network number with which the mobile terminal's network number was linked. To that end the user of the mobile terminal may communicate, by any means, the value of the relevant fixed number(s) to the user of the fixed or Internet based terminal, desiring call the mobile terminal.

So, after the reception of a call on the relevant fixed network number of the interconnection server - representing the relevant number of the mobile terminal - the interconnection server, after retrieving in its (link) register the associated number of the mobile terminal, transmits to the network number of the mobile terminal a request to set up a connection to the interconnection server.

After reception of the request to set up a connection - the second partial connection - to the interconnection server the mobile terminal may - manually of automatically - call the interconnection server. After that call from the mobile terminal to the interconnection server has been established, the interconnection server interconnects both the (first partial) connection of the fixed terminal to the interconnection server with the (second partial) connection of the mobile terminal to the interconnection server at one side, at the other side.

Below a preferred system will be outlined which is arranged for performing the method as outlines above.

Exemplary Embodiment

Figure 1 shows schematically a system for performing the method according to the invention.

Figure 2 shows schematically the situation that the fixed terminal is IP based and is connected to the Internet.

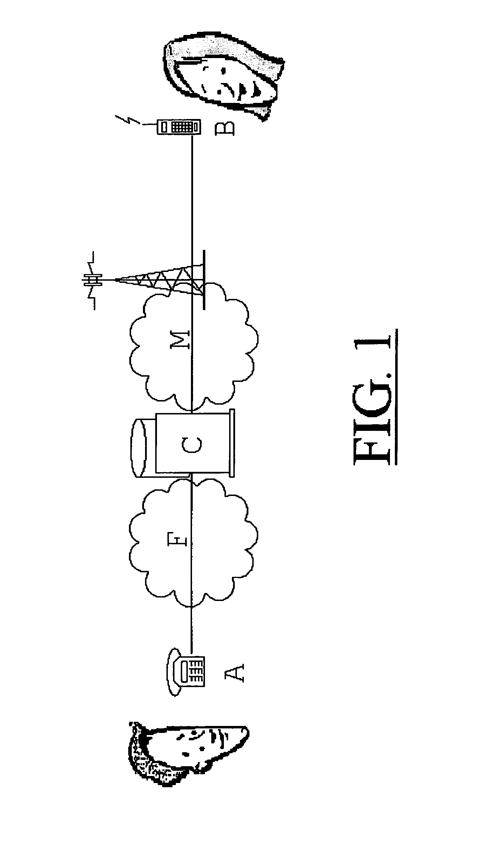

The system in figure 1 shows a fixed, e.g. POTS or IP based, terminal A and a mobile terminal B, a fixed telecommunication network F (or, alternatively, the Internet, when terminal A is IP enabled) and a mobile telecommunication network M and an interconnection server C. The interconnection server C is connectable with the fixed network by means of a number of fixed network numbers. The interconnection server comprises means like a processor and a database which are enabled for registering and linking, the mobile terminal's network number Bm with at least one of those fixed network numbers Bf. So, as an example, mobile network number Bm=+31612345678 of mobile terminal B could be registered within the interconnection server's database and linked to fixed network number Bf=+31507654321:

```
Record12345<+31612345678,+31507654321>.
```

In whatever way the user of fixed terminal A has been informed that, if he wants to call user B, he has to call Bf=+31507654321 instead of user B's mobile number Bm=+31612345678. The interconnection server C is arranged, by means of its processor and database, after being called at one of its nodes, in this case assigned to the fixed network number Bf=+31507654321, to retrieve in the database whether that number +31507654321 has been registered (a) and, if so, to which mobile number it is linked to (b). In this case the processor retrieves from Record12345 that network number +31507654321 points to +31612345678.

In consequence, interconnection server C sends, using interconnection server's network number (which can be a fixed or a mobile number), e.g. +31687654321, a request to the mobile terminal B, addressed to mobile number Bm=+31612345678, to set up a connection to the interconnection server C. This interconnection server C request could be treated manually at the mobile terminal's side, e.g. supported by an automatically generated audible request message, after which the mobile terminal's user rejects the call and makes - within a short response period - a new call to the interconnection server C.

It is preferred, however, that the mobile terminal B comprises a small software module which is arranged to response automatically after reception of a request from the interconnection server C. That software module could e.g. be making use of the value of the calling line identifier (CLI). In this case, when the mobile terminal software detects, from the CLI, that the mobile terminal is called by +31687654321, it knows that it concerns a call from the interconnection server's mobile network number, requesting to be called back (e.g. within a short period of time). The terminal's software module could automatically, after having detected the interconnection server's CLI, reject the call and setup a backward call to same -or another- (mobile or fixed) number assigned to the interconnection server. In either case, the interconnection server can detect from the CLI of the incoming (backward) call, which mobile terminal is calling, in this case the terminal having the mobile network number +31612345678. Having registered that it had requested mobile network number +31612345678 to call back, the interconnection server's processor is able to interconnect, after the connection from the mobile terminal B to the interconnection server C has been established, both, the connection of the mobile terminal B to the interconnection server C at one side, with the connection of the fixed terminal A to the interconnection server C at the other side.

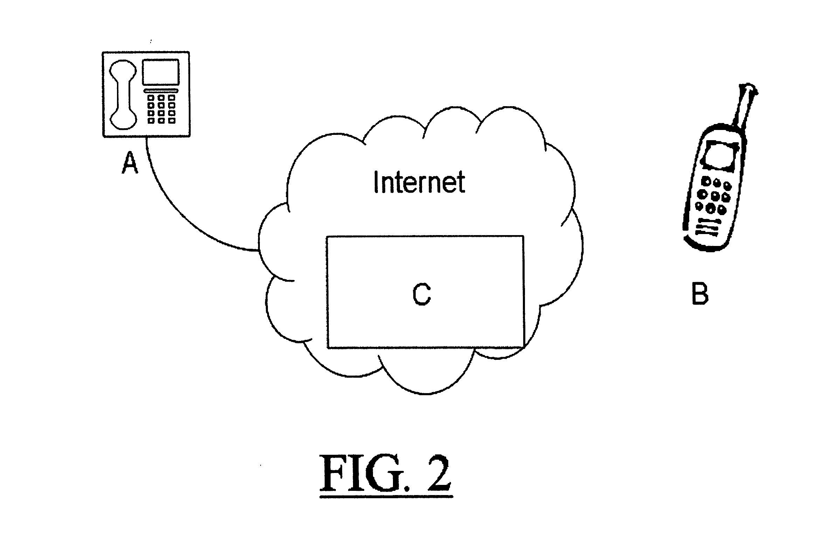

In figure 2 the server C is part of or is connected with the Internet and terminal A is an IP (VoIP or at least IP data) enabled terminal. Terminal A calls the address (e.g. telephone number) of mobile telephone terminal B. Server C signals to terminal B by means of e.g. an SMS message or an other form of signalling, to trigger terminal B to call to server C. Terminal A may initiate a call to server C e.g. by calling the VoIP address of C or directly the VoIP address of terminal A.

It is noted that server C may be located within a PC, e.g. a PC which simultaneously is in use as terminal A.

## Claims

1. Method for making a connection between a fixed terminal or Internet based terminal (A) and a mobile terminal (B) via a fixed telecommunication network (F) and a mobile telecommunication network (M), comprising next steps:

   - the mobile terminal's network number (Bm) is, by means of an interconnection server (C) which is connectable with the fixed network by means of a number of fixed network numbers, registered, linking the mobile terminal's network number (Bm) to at least one of those fixed network numbers (Bf);
   - the fixed terminal (A), desiring to set up a connection to the mobile terminal (B), sets up a call to the fixed network number (Bf) with which the mobile terminal's network number (Bm) was linked;
   - the interconnection server (C) sends a request to the mobile terminal (B), using its mobile network number (Bm), to set up a connection to the interconnection server;
   - after the connection from the mobile terminal (B) to the interconnection server (C) has been established, the interconnection server interconnects both, the connection of the mobile terminal (B) to the interconnection server (C) at one side, with the connection of the fixed terminal (A) to the interconnection server (C) at the other side.

2. System for making a connection between a fixed terminal (A) and a mobile terminal (B) via a fixed telecommunication network (F) and a mobile telecommunication network (M),

- comprising an interconnection server (C) which is connectable with the fixed network by means of a number of fixed network numbers, which interconnection server, moreover, is arranged for registering and linking, the mobile terminal's network number (Bm) with at least one of those fixed network numbers (Bf);

- said interconnection server (C), moreover, being arranged to send a request to the mobile terminal (B) to set up a connection to the interconnection server after being called by the fixed terminal (A) at the fixed network number (Bf) linked to the mobile network number (Bm) registered in the initial step;

- said interconnection server (C), moreover, being arranged to interconnect, after the connection from the mobile terminal (B) to the interconnection server (C) has been established, both, the connection of the mobile terminal (B) to the interconnection server (C) at one side, with the connection of the fixed terminal (A) to the interconnection server (C) at the other side.

3. System according claim 2, the mobile terminal comprising means to automatically set up a connection to the interconnection server (C) on the reception of said request from the interconnection server.

4. Mobile terminal (B) which is arranged for the system according to claim 3, comprising an automatic response module which is arranged to detect said request from the interconnection server and to setup automatically a backward connection to the interconnection server as a response to said request.

FIG. 1

# FIG. 2

European Patent
Office

**EUROPEAN SEARCH REPORT**

Application Number

EP 06 07 6686

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 99/20021 A (NOKIA TELECOMMUNICATIONS OY [FI]; HAEGGSTROEM JOHAN [FI]) 22 April 1999 (1999-04-22) * page 1, line 4 - line 7 * * page 3, line 19 - line 26 * * page 8, line 16 - page 9, line 32 * * figures 2,4 * | 1-4 | INV. H04Q7/38 |
| A | WO 97/16007 A (FINLAND TELECOM OY [FI]; KARHAPAEAE TUOMO [FI]; SAKSANEN PAULI [FI]) 1 May 1997 (1997-05-01) * page 4, line 8 - line 23 * * page 7, line 20 - line 31 * * page 10, line 31 - page 11, line 16 * * page 14, line 6 - line 32 * * figures 1,4a,4b * | 1-4 | |
| A | EP 0 928 095 A (LUCENT TECHNOLOGIES INC [US]) 7 July 1999 (1999-07-07) * abstract * * paragraphs [0001], [0005] - paragraph [0006] * * paragraph [0013] - paragraph [0015] * * paragraphs [0022], [0031] * * figure 4 * | 1-4 | **TECHNICAL FIELDS SEARCHED (IPC)** H04Q |
| A | WO 00/18090 A (NOKIA NETWORKS OY [FI]; PESONEN TERO [FI]) 30 March 2000 (2000-03-30) * page 1, line 8 - line 28 * * page 4, line 15 - page 6, line 10 * * page 9, line 33 - page 10, line 23 * * figures 1,5 * | 1-4 | |

The present search report has been drawn up for all claims

| Place of search | Date of completion of the search | Examiner |
|---|---|---|
| Munich | 12 February 2007 | Rosenauer, Hubert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 06 07 6686

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2007

| Patent document cited in search report | | Publication date | Patent family member(s) | | Publication date |
|---|---|---|---|---|---|
| WO 9920021 | A | 22-04-1999 | AT | 313189 T | 15-12-2005 |
| | | | AU | 747368 B2 | 16-05-2002 |
| | | | AU | 9443998 A | 03-05-1999 |
| | | | CA | 2274154 A1 | 22-04-1999 |
| | | | CN | 1242898 A | 26-01-2000 |
| | | | DE | 69832788 T2 | 13-07-2006 |
| | | | EP | 0983668 A2 | 08-03-2000 |
| | | | ES | 2255183 T3 | 16-06-2006 |
| | | | FI | 973933 A | 11-04-1999 |
| | | | JP | 3650800 B2 | 25-05-2005 |
| | | | JP | 2001506110 T | 08-05-2001 |
| WO 9716007 | A | 01-05-1997 | AU | 7302596 A | 15-05-1997 |
| EP 0928095 | A | 07-07-1999 | CA | 2257051 A1 | 02-07-1999 |
| | | | JP | 2000022828 A | 21-01-2000 |
| | | | US | 2002167943 A1 | 14-11-2002 |
| WO 0018090 | A | 30-03-2000 | AU | 5865299 A | 10-04-2000 |
| | | | CN | 1319302 A | 24-10-2001 |
| | | | EP | 1121796 A2 | 08-08-2001 |
| | | | FI | 982026 A | 22-03-2000 |

EPO FORM P0459

For more details about this annex : see Official Journal of the European Patent Office, No. 12/82